Europäisches Patentamt

(19) European Patent Office

Office européen des brevets

(11) Veröffentlichungsnummer: **0 186 080**
**B1**

(12) **EUROPÄISCHE PATENTSCHRIFT**

(45) Veröffentlichungstag der Patentschrift:
14.03.90

(51) Int. Cl.⁴: **C09J 7/02, C09J 5/06, B42C 9/02**

(21) Anmeldenummer: 85115976.4

(22) Anmeldetag: 14.12.85

(54) **Verfahren zur Herstellung eines thermoplastisch wirkenden Klebeelementes und Verfahren zu seiner Verwendung.**

(30) Priorität: 28.12.84 DE 3447702

(43) Veröffentlichungstag der Anmeldung:
02.07.86 Patentblatt 86/27

(45) Bekanntmachung des Hinweises auf die Patenterteilung:
14.03.90 Patentblatt 90/11

(84) Benannte Vertragsstaaten:
AT BE CH DE FR GB IT LI NL SE

(56) Entgegenhaltungen:
CH-A- 533 514
GB-A- 1 154 751
US-A- 2 446 414
US-A- 2 474 619
US-A- 4 345 349

(73) Patentinhaber: Planatolwerk Willy Hesselmann
Chemische und Maschinenfabrik für Klebetechnik
GmbH & Co. KG, Fabrikstrasse 30,
D-8201 Rohrdorf-Thansau(DE)

(72) Erfinder: Koller, Hubert, Auer Strasse 50,
D-8201 Altenbeuern(DE)
Erfinder: Kleinhans, Gerhard, Lärchenstrasse 16,
D-8219 Rimsting(DE)

(74) Vertreter: Ernicke, Hans-Dieter, Dipl.-Ing. et al,
Schwibbogenplatz 2b, D-8900 Augsburg(DE)

## Beschreibung

Die Erfindung bezieht sich auf ein Verfahren zur Herstellung eines thermoplastisch wirkenden Klebeelementes entsprechend dem Oberbegriff des Hauptanspruches. Derartige Klebeelemente werden überwiegend in der Buchbindetechnik eingesetzt, um die Blattkanten von Loseblatt-Stapeln untereinander zu verkleben und um Fälzel oder Umschläge mit dem Blattstapelrücken zu verbinden.

Im Falle der DE-A 22 56 259 wird eine Unterlage aus Papier, Kunststoff oder dergleichen einseitig mit einem thermoplastischen Klebstoff beschichtet. Wird ein so gebildetes Klebeelement, dessen Beschichtung hart und daher nicht klebefähig ist, unter Druck und Wärme gegen den Blattstapelrücken gebracht, dann schmilzt der thermoplastische Klebstoff. In dieser flüssigen Phase soll der Klebstoff nicht nur längs der Blattkanten, sondern möglichst auch in geringfügiger Breite zwischen diesen Blattkanten zu liegen kommen. Wenn der Klebstoff zufolge Kühlung trocknet, sind alle Blätter des Blattstapels untereinander fest verbunden.

Bei der Lehre der DE-A 28 10 077 wird ein Klebestreifen ausschließlich aus einem Schmelzkleber gebildet, der in seiner Filmeigenschaft hart eingestellt ist. Wenn ein solcher Klebestreifen zwischen einen Umschlag und den Blattstapelrücken gebracht und der Umschlag unter Wärmeeinwirkung gegen den Blattstapel gepreßt wird, erfolgt nicht nur eine Klebeverbindung der Blattkanten untereinander, sondern auch mit dem Umschlag.

In der Praxis hat sich gezeigt, daß sich nach diesen bekannten Methoden hergestellte Broschüren, Bücher und dgl. nicht so weit aufschlagen lassen, wie man dies bei mit Dispersionsklebern klebegebundenen Broschüren, Büchern und dergleichen gewohnt ist. Ein mit Schmelzklebern gebundener Blattstapel weist vielmehr im Rückenbereich eine starke Klammerwirkung auf, die dem Aufschlagen des Blattstapels einen erheblichen Widerstand entgegensetzt. Wenn man versucht, die aufgeschlagenen Teile des Blattstapels unter Krafteinwirkung auseinanderzudrücken, beobachtet man häufig, daß auf das einzelne Blatt im Bereich seiner Einbettung im Klebstoff zufolge dessen Klammerwirkung eine Hebelkraft einwirkt, die zum glatten Herausbrechen der Blattkante aus der Klammer führt.

Man versucht natürlich, die Blattkanten in der Schmelzkleberschicht dadurch besser zu verankern, daß man die Blattkanten aufrauht bzw. den Blattstapelrücken abfräst. Solche Methoden, die in der automatischen Buchbinderei üblich sind, bedingen nur unnötige verfahrenstechnische Maßnahmen, indem nämlich der beim Aufrauhen oder Fräsen entstandene Papierstaub gesammelt und abgesaugt werden muß. Dennoch verbleiben an den so behandelten Blattstapeln noch Papierstaubreste, die abgebürstet werden müssen. Die Klammerwirkung der ausgehärteten Schmelzkleberschicht wird vergrößert, und folglich das Aufschlagvermögen des gebundenen Blattstapels weiter beeinträchtigt.

Die vorbekannten Klebeelemente werden aber auch für andere Klebzwecke, beispielsweise zum Etikettieren oder zum Verbinden schwerverklebbarer Werkstoffe eingesetzt.

Vielfach wird angestrebt, Schmelzkleber mit in der Filmeigenschaft harter Einstellung zu verwenden, weil diese den Vorteil haben, daß eine abgekühlte Beschichtung absolut klebeunfähig ist. Die Klebeeigenschaft entsteht erst mit der Erwärmung bei bestimmten Temperaturen.

In der Filmeigenschaft weniger hart eingestellte Schmelzkleber würden die Eigenschaft mit sich bringen, im abgekühlten Zustand authäsiv zu wirken, was beim Hantieren und Verpacken der damit beschichteten Gegenstände zu unangenehmen Begleitumständen führt.

Durch die US-A 2 474 619 ist ein Verfahren zur Herstellung von einseitig klebefähigen Klebeelementen unter Verwendung eines Schmelzklebers bekannt geworden, der eine weiche, flexible Beschaffenheit aufweisen soll. Damit die Klebstoffschicht nicht außenseitig offenliegt, wird ein Trägerblatt aus undurchlässigem Material einseitig mit dem Klebstoff beschichtet und die Klebeschicht mit einem porösen zweiten Blatt abgedeckt. Durch Kühlung des Trägerblattes wird verhindert, daß der Klebstoff das poröse Blatt durchdringen kann. Beim Erwärmen des Klebeelementes dringt der Klebstoff durch das poröse zweite Blatt und führt an dessen Außenseite zur Verklebung. Eine beidseitige Verklebung ist mit diesem vorbekannten Klebeelement nicht möglich, was auch für ein ähnliches Klebeelement nach der CH-A 533 514 gilt, bei dem der Klebstoff durch das gitterförmige Abdeckblatt auf das undurchlässige Trägerblatt aufgetragen wird.

Der Erfindung liegt nun die Aufgabe zugrunde, die Effektivität solcher mit Schmelzkleberschichten versehener Klebeelemente in verschiedenen Richtungen wesentlich zu steigern, indem einerseits maschinelle Klebeverfahren wesentlich verbessert und dafür erforderliche Gerätschaften konstruktiv vereinfacht und daher verbilligt werden, und indem andererseits die Möglichkeiten erschlossen werden, bisher als schwierig oder überhaupt nicht verklebbar geltende Werkstoffe doch miteinander verkleben zu können.

Erfindungsgemäß wird diese Aufgabe durch die kennzeichnenden Merkmale des Hauptanspruches gelöst, wonach neuartige Klebeelemente herstellbar sind, bei denen der Schichtenträger aus einem für Schmelzkleber in flüssiger Form durchlässigen, wärmebeständigen Material besteht und nur auf einer Seite eine Beschichtung aus einem in der Filmeigenschaft nicht hart eingestellten Schmelzkleber mit verminderter Biegesteifigkeit aufweist, wobei aber das Klebeelement beim Erwärmen beidseitig klebefähig wird.

Durchlässige Schichtenträger können in den verschiedensten Weisen gebildet werden, indem beispielsweise ein nicht durchlässiges Material mit einer Vielzahl von Öffnungen, Schlitzen oder sonstigen Durchbrechungen versehen wird. Es können auch Gewebe und Gewirke eingesetzt werden. Als besonders geeignet haben sich Schichtenträger aus einem Vlies ewiesen, wobei unter "Vlies" eine in Blatt- oder Streifenform vorliegende Faserschicht verstanden wird, die eine ausreichende Festigkeit aufweist, um mit ihr hantieren zu können. Es hat sich als zweckmäßig erwiesen, Fasern aus Cellulose, Polyamid, Polyester, Glaswolle und dergleichen zu verwenden.

Die geforderte Wärmebeständigkeit des Schichtenträgers beruht darauf, daß er mit einem erhitzten Schmelzkleber beschichtet wird und daher bei Temperaturen von ca. 160 bis 200 C° formstabil bleiben muß.

Von dem zur Beschichtung vorzusehenden Klebstoff wird primär verlangt, daß er keine oder eine nur unwesentliche Klammerwirkung im ausgehärteten Zustand entfalten soll. Der Schmelzkleber nach der Erfindung ist folglich nicht steif, sondern vielmehr lappig, geschmeidig oder dergleichen eingestellt, was sich auch dadurch äußert, daß die Schmelzkleberschicht eine verminderte Biegesteifigkeit besitzt.

Erfindungsgemäß kann die Beschichtung auch authäsiv sein, was zur Folge hat, daß man die Beschichtungen nicht aneinanderliegen lassen darf.

Es ist zwar durch die CH-A 533 514 ein Klebeelement in Form einer Folie bekannt, die einseitig ein Gittergewebe trägt, das mit ihr über einen Schmelzkleber verbunden ist, der durch die Poren des Gittergewebes dringen soll. Das Verfahren zur Herstellung dieser Klebeelemente geht aber im Gegensatz zur Erfindung gerade davon aus, den erwärmten Schmelzkleber mit einer Walze durch die Poren des Gittergewebes bis auf die Folie zu drücken.

In einer Ausgestaltung der Erfindung weist die Schmelzkleber-Beschichtung eine größere Dicke, z.B. 200 μ bis 500 μ auf, als sie für einseitige Verklebung des Schichtenträgers erforderlich wäre. Es kann sogar zweckmäßig sein, die Dicke der Schmelzkleberschicht größer als die Dicke des Schichtenträgers zu bemessen.

Diese oder ähnlich gestaltete Klebeelemente haben die Wirkung, daß die nur auf einer Seite des Schichtenträgers befindliche Beschichtung unter Erwärmung und Druck den Schichtenträger durchschlägt und somit aus der unbeschichteten Oberfläche austritt. Wenn man also ein erfindungsgemäßes Klebeelement zwischen zwei Gegenständen, insbesondere aus nicht oder nur schwierig verklebbaren Materialien, anordnet und diese Gegenstände unter Erwärmung gegeneinander verpreßt, dann erfolgt durch die Verflüssigung und durch die vorstehend erwähnte Wirkung eine effektive Verklebung dieser Gegenstände. Es hat sich dabei gezeigt, daß die ausgehärtete Verklebung keine Versteifung oder gar Klammerwirkung erfährt, sondern geschmeidig bleibt. Zufolge der Verwendung von Schmelzklebern mit in der Filmeigenschaft nicht harter Einstellung sind Verklebungen möglich, die bisher als nicht durchführbar galten.

In den Unteransprüchen 2 bis 5 sind Ausführungsbeispiele aufgeführt, die zweckmäßige Bedingungen aufzeigen, unter denen ein Erstarren des aufgetragenen Schmelzklebers ermöglicht wird, bevor er den Schichtenträger durchdringen kann.

Mit dem erfindungsgemäßen Verfahren wird das Paradoxon aufgelöst, das scheinbar darin besteht, einen durchlässigen Schichtenträger einseitig mit einem bestimmten Schmelzkleber zu beschichten, ohne daß der Klebstoff an die andere Seite gelangt und andererseits von diesem Klebeelement zu erwarten, daß es im echten Verklebefall zuläßt, daß die Beschichtung den Schichtenträger durchschlägt.

Dieser Widerspruch läßt sich erfindungsgemäß dadurch auflösen, daß man bei der Beschichtung des Schichtenträgers darauf achtet, den im Auftrag befindlichen flüssigen Schmelzkleber schneller erstarren zu lassen, als er Zeit braucht, durch den Schichtenträger hindurchzudringen.

Gegenstand der Erfindung ist weiterhin ein Verfahren zum Verkleben von Gegenständen unter Verwendung des erfindungsgemäßen Klebeelementes, bei dem zunächst das Klebeelement mit seiner beschichteten Seite unter Anwendung gemäßigter Wärme an einem Gegenstand haftend fixiert wird, woraufhin beide Gegenstände zusammengeführt und miteinander bei der für die Verklebung erforderlichen erhöhten Temperatur verpreßt werden. Das Anheften des Klebeelementes unter gemäßigter Wärme soll die Oberfläche der Beschichtung lediglich klebrig bis teigig machen, aber nicht in einen flüssigen Zustand versetzen. Erst mit Einwirkung von Wärme mit erhöhter Temperatur wird die Beschichtung flüssig und durchschlägt den Schichtenträger des Klebeelementes.

In der Buchbindetechnik wird erfindungsgemäß das Klebeverfahren so ausgeführt, daß das Klebeelement auf einem Blattstapelrücken, dessen Blätter glatt beschnitten und nicht aufgerauht zu sein brauchen, haftend aufgesetzt, danach ein unbeschichteter Umschlag an den Blattstapelrücken herangeführt und unter Wärmeeinwirkung angepreßt wird, wobei der Blattstapel mit dem angepreßten Umschlag längs einer Heizstrecke geführt wird.
Eine geeignete Vorrichtung zur Durchführung dieses Verfahrens ist im Anspruch 12 angegeben.

Einzelheiten der Erfindung ergeben sich aus der Zeichnung. In ihr ist die Erfindung schematisch und beispielsweise dargestellt. Es zeigen:

Fig. 1: eine perspektivische Teilansicht eines Klebeelementes,
Fig. 2 und 3: Querschnitte durch miteinander zu verbindende Gegenstände unter Zwischenfügung von Klebeelementen gemäß Fig. 1 vor und nach der Verklebung und
Fig 4: eine schematische Seitenansicht einer automatischen Klebebindevorrichtung in symbolischer Darstellungsweise.

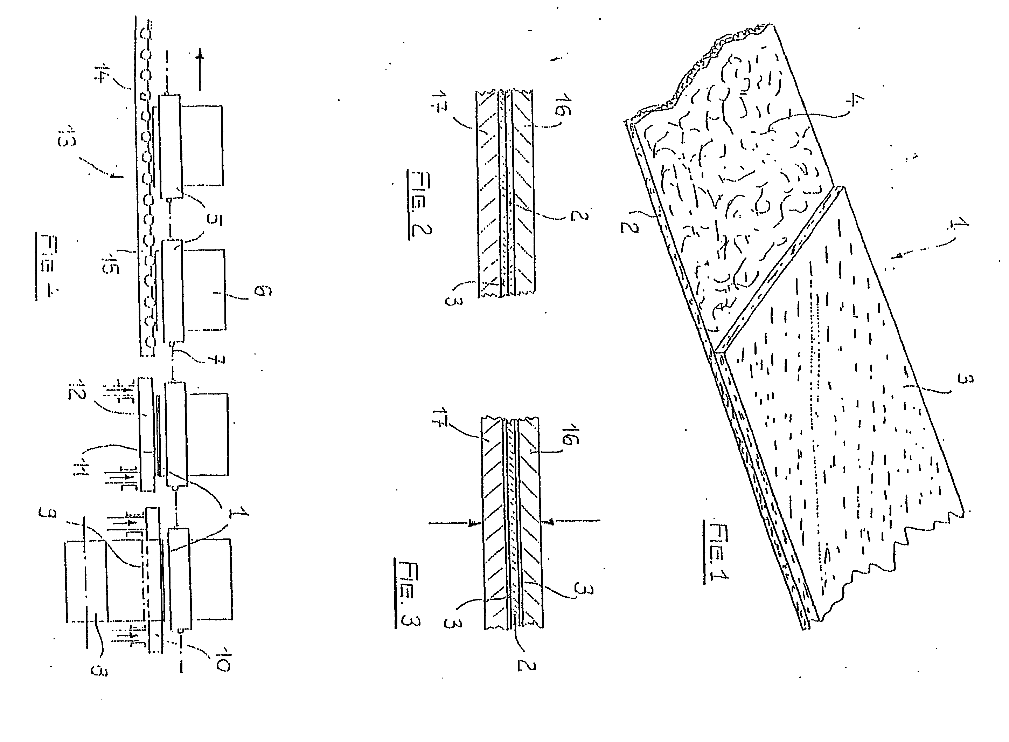

Fig. 1 zeigt ein Klebeelement 1, bestehend aus einem Schichtenträger 2 und einer Beschichtung 3. Der Schichtenträger 2 ist durchlässig. In der Darstellung der Fig. 1 besteht er aus einem Vlies, gebildet von Fasern 4, insbesondere aus Cellulose, Polyamid, Polyester, Glaswolle und dgl. Es kann aber auch ein an sich undurchlässiges Material, z.B. Papier, Kunststoff und dgl. Verwendung finden, das durch Anbringen von Löchern, Ausnehmungen, Perforationen und dgl. durchlässig gemacht worden ist. Der Schichtenträger 2 kann blattförmig, streifenförmig, etikettenartig und dgl. gebildet sein.

Die Beschichtung 3 besteht aus einem Schmelzkleber mit einer in der Filmeigenschaft nicht harten, sondern eher lappigen bzw. geschmeidigen Einstellung. Solche Schmelzkleber sind von der Anmelderin beispielsweise unter der Bezeichnung HM® 109 KF bzw. Opimelt® 828 in den Verkehr gebracht worden.

Hierbei ist wichtig, daß die Beschichtung 3 nur an einer Seite des Schichtenträgers 2 vorgesehen ist. Dadurch werden nämlich derartige Klebeelemente, deren Beschichtungsoberfläche leicht authäsive Eigenschaften besitzt, hantierfähig, weil z.B. beim Stapeln oder Aufeinanderrollen niemals die Oberflächen der Beschichtungen 3 aneinander zu liegen kommen

Solche Beschichtungen 3 aus nicht hart eingestellten Schmelzklebern werden in besonderer Weise auf Schichtenträger 2 aufgebracht, indem nämlich darauf geachtet wird, daß das in Auftrag befindliche Material den durchlässigen Schichtenträger 2 nicht durchschlagen kann. Dies erreicht man beispielsweise dadurch, daß man den Schichtenträger während während der Beschichtung kühlt, so daß der noch flüssige Schmelzkleber unmittelbar nach dem Auftrag einen Kälteschock erfährt und spontan aushärtet. Die gleiche Wirkung kann man dadurch erzielen, daß man den Schichtenträger mit entsprechend hoher Geschwindigkeit an der Beschichtungsvorrichtung entlangführt. Schließlich kann man den Schmelzkleber in einer bestimmten Viskosität auftragen, beispielsweise im Rakelverfahren. Auch dadurch wird erreicht, daß der Schmelzkleber erstarrt, bevor er den Schichtenträger 2 durchdringen kann.

Man kann aber auch mit der Rezeptur des Schmelzklebers Voraussetzungen für Einhaltung dieser Bedingungen schaffen, indem man den Anteil an größermolekularen Bestandteilen des Schmelzklebers erhöht.

Gemäß Fig 2 wird nun ein so aufgebauter Schichtenträger 2 zwischen zwei zu verbindende Gegenstände 16,17 gebracht. Man sieht, daß die Beschichtung 3 am Gegenstand 17 und die unbeschichtete Seite des Schichtenträgers 2 am Gegenstand 16 anliegt. Erwärmt man nun diese Anordnung gemäß Fig. 2 und preßt sie im Sinne von Fig. 3 zusammen, wird die Beschichtung 3 flüssig und wandert durch den Schichtenträger 2. Man erkennt nun beidseits des Schichtenträgers 2 die Beschichtung 3, die an Dicke verloren hat. Dies ist der Grund dafür, daß das Klebeelement 1 gemäß Fig. 1 mit einer verhältnismäßig dicken Beschichtung 3 belegt wird, beispielsweise in der Größenordnung von 200 μ bis 500 μ.

Die Fig. 4 zeigt ein Beispiel, wie erfindungsgemäße Klebeelemente 1 in der Klebebindetechnik für Bücher, Broschüren und dgl. eingesetzt werden können. Die zu verleimenden Blattstapel 6 brauchen an dem Rücken lediglich geschnitten zu werden. Das Aufrauhen oder Fräsen der Blattkanten ist entbehrlich. In üblicher Weise werden die Blattstapel 6 zwischen Klemmbacken 5 eingespannt und längs einer Fördereinrichtung 7 bewegt. Die Klebeelemente 1 sind in Form einer Klebeelement-Rolle 8 vorgesehen, von der ein Klebeelement 1 jeweils mittels einer Schneidevorrichtung 9 abgetrennt wird. Das so entsprechend dem Blockformat hergerichtete Klebeelement 1 wird mit Hilfe der Andrückvorrichtung 10 gegen den Blattstapelrücken gedrückt und dabei leicht angeheizt. Auf diese Weise soll lediglich erreicht werden, daß das Klebeelement 1 am Blattstapelrücken haftet.

An einer nachfolgenden Stelle wird der einzelne Umschlag 11 mit Hilfe der Andrückvorrichtung 12 von unten her gegen das Klebeelement 1 und den Blattstapelrücken angedrückt, wobei eine intensive Beheizung zur Verflüssigung des Schmelzklebers eingesetzt wird. Im weiteren Vorschub der Blattstapel 6 wird entlang der Heizstrecke 13 mit Hilfe der Andrückrollen 14 der Anpreßdruck des Umschlages 11 am Klebeelement 1 und am Blattstapel 6 aufrechterhalten. Die Heizstrecke 13 wird beispielsweise durch einen Heizrahmen 15 gebildet.

Während des Durchlaufes des Blattstapels 6 durch diese Heizstrecke 13 hat der Schmelzkleber genügend Zeit, auf der einen Seite die Klebebindung der Blätter und auf der anderen Seite das Ankleben des Umschlages 11 an den Blattstapelrücken herbeizuführen. Das Abkühlen, Aushärten des Klebstoffes und Abführen der fertigen Buchblöcke erfolgt dann in üblicher Weise.

Ein auf diese Weise klebegebundener und in einen Umschlag eingehängter Blattstapel weist keine nennenswerte Klammerwirkung der Klebstoffschicht mehr auf. Die Blattkanten sind vielmehr in einer geschmeidigen bzw. lappigen Klebstoffschicht eingebettet, die eine verminderte Biegesteifigkeit aufweist.

Infolgedessen sind nach der Erfindung hergestellte Bücher, Broschüren und dgl. in gleicher Weise voll aufschlagbar, wie man dies von solchen mit Dispersionsklebern gebundenen Gegenständen gewöhnt ist. Die Blattkanten unterliegen beim Aufschlagen zufolge der lappig wirkenden Klebstoffschicht keiner Hebelwirkung und brechen folglich nicht aus.

Es hat sich als zweckmäßig erwiesen, den Schmelzkleber umso weicher einzustellen, je härter das Material der zu bindenden Blätter ist.

Stückliste

1 Klebeelement
2 Schichtenträger
3 Beschichtung
4 Faser
5 Klemmbacke
6 Blattstapel
7 Fördereinrichtung
8 Klebeelement-Rolle
9 Schneidevorrichtung
10 Andrückvorrichtung (beheizt
11 Umschlag
12 Andrückvorrichtung (beheizt)
13 Heizstrecke
14 Andrückrolle
15 Heizrahmen
16 Gegenstand
17 Gegenstand

## Patentansprüche

1. Verfahren zur Herstellung eines thermoplastisch wirkenden Klebeelementes (1), bestehend aus einem mit einer Schmelzkleberschicht (3) versehenen, wärmebeständigen Schichtenträger (2), dadurch gekennzeichnet, daß zur Herstellung eines beidseitig klebefähigen Klebeelementes (1) ein für die Klebebindung von Blattstapeln (6) geeigneter, in der Filmeigenschaft jedoch nicht hart, sondern mit verminderter Biegesteifigkeit eingestellter Schmelzkleber in flüssiger, bzw. extrudierter Form auf die eine Seite des aus flüssigkeitsdurchlässigem Material bestehenden Schichtenträgers (2) unter äußeren Bedingungen aufgetragen wird, die ein Erstarren bzw. Verhindern der Fließeigenschaft bewirken, bevor der Schmelzkleber den Schichtenträger (2) bis auf dessen andere Seite durchdringen kann.

2. Verfahren nach Anspruch 2, dadurch gekennzeichnet, daß der Schmelzkleber (2) auf einen gekühlten Schichtenträger aufgebracht wird.

3. Verfahren nach Anspruch 2 oder 3, dadurch gekennzeichnet, daß der Schichtenträger (2) mit entsprechend hoher Geschwindigkeit an der Beschichtungsvorrichtung entlang geführt wird.

4. Verfahren nach Anspruch 1 oder einem der folgenden, dadurch gekennzeichnet, daß der Schmelzkleber mit einer besonders eingestellten Viskosität aufgetragen wird.

5. Verfahren nach Anspruch 1 oder einem der folgenden, dadurch gekennzeichnet, daß der Schmelzkleber in einer größeren Dicke von z.B. 200 μ bis 500 μ, als sie für einseitige Verklebung des Schichtenträgers (2) erforderlich wäre, aufgetragen wird.

6. Verfahren zum Verkleben von Gegenständen (16, 17) unter Verwendung eines nach den Ansprüchen 1 bis 5 hergestellten Klebeelementes (1), dadurch gekennzeichnet, daß zunächst das Klebeelement mit seiner beschichteten Seite (3) unter Anwendung gemäßigter Wärme am einen Gegenstand (16) haftend fixiert wird, woraufhin beide Gegenstände (16, 17) zusammengeführt und miteinander bei der für die Verklebung erforderlichen erhöhten Temperatur verpreßt werden.

7. Verfahren nach Anspruch 6, dadurch gekennzeichnet, daß das Klebeelement (1) auf einen Blattstapelrücken (6), dessen Blätter glatt beschnitten sind und nicht aufgerauht zu sein brauchen, haftend aufgesetzt, danach ein unbeschichteter Umschlag (11) an den Blattstapelrücken (6) herangeführt und unter Wärmeeinwirkung angepreßt wird, wobei der Blattstapel (6) mit dem angepreßten Umschlag (11) längs einer Heizstrecke (13) geführt wird.

8. Vorrichtung zur Durchführung des Verfahrens nach Anspruch 7, bei der längs einer Förderstrecke von die Blattstapel (6) zwischen sich aufnehmenden Spannmitteln (5) Anordnungen zum Aufbringen einer Schmelzkleberschicht und zum Heranführen und Anpressen von Umschlägen (11) und dgl. sich befinden, dadurch gekennzeichnet, daß hintereinander eine Anordnung (10) zum Vorwärmen und Andrücken eines mit dem Schmelzkleber (3) versehenen Klebeelementes (1) an die Blattstapelrücken (6), eine beheizte Anordnung (12) zum Andrücken der Umschläge (11) an die mit den Klebeelementen (1) versehenen Blattstapelrücken (6) und eine Heizstrecke (13) mit einer die Umschläge (11) gegen die Blattstapel (6) pressenden Anordnung (14) vorgesehen ist.

## Claims

1. Method for the manufacture of a thermoplastically acting adhesive member (1), comprising a heat-resistant layer-support (2) provided with a layer of thermoplastic adhesive (3), characterised in that for the manufacture of an adhesive member (1) which is adhesive on both sides, a thermoplastic adhesive, which is suitable for the adhesive binding of stacks of sheets (6), and which is not however hard in the film property but has reduced bending resistance, is applied in the liquid or extruded form to the one side of the layer-support (2) made of material which is permeable to liquids, under external conditions which bring about hardening or prevent the flow property, before the thermoplastic adhesive can penetrate the layer-support (2) as far as its other side.

2. Method according to Claim 2, characterised in that the thermoplastic adhesive (2) is applied to a cooled layer-support.

3. Method according to Claim 2 or 3, characterised in that the layer-support (2) is guided at a correspondingly high speed along the coating device.

4. Method according to Claim 1 or one of the following Claims, characterised in that the thermoplastic adhesive is applied with a specially adjusted viscosity.

5. Method according to Claim 1 or one of the following Claims, characterised in that the thermoplastic adhesive is applied in a greater thickness of for example 200 μ to 500 μ than would be necessary for single-sided sticking of the layer-support (2).

6. Method for sticking together objects (16, 17) using an adhesive member (1) produced according to Claims 1 to 5, characterised in that first of all the adhesive member is fixed with its coated side (3) adhering to an object (16), with the application of moderate heat, whereupon both objects (16, 17) are guided together and pressed one against the other at the increased temperature necessary for sticking.

7. Method according to Claim 6, characterised in that the adhesive member (1) is stuck to a back of a stack of sheets (6), whereof the sheets are cut smoothly and do not need to be roughened, then an uncoated cover (11) is supplied to be back of the stack of sheets (6) and pressed thereagainst under the action of heat, the stack of sheets (6) with the cover (11) pressed thereagainst being guided along a heating section (13).

8. Apparatus for carrying out the method according to Claim 7, in which located along a conveying section of clamping means (5) receiving the stacks of sheets (6) therebetween are arrangements for applying a layer of thermoplastic adhesive and for supplying and pressing on covers (11) and the like, characterised in that provided one behind the other are an arrangement (10) for pre-heating and pressing an adhesive member (1) provided with the thermoplastic adhesive (3), against the back of the stack of sheets (6), a heated arrangement (12) for pressing the covers (11) onto the back of the stack of sheets (6) provided with the adhesive members (1) and a heating section (13) with an arrangement (14) pressing the covers (11) against the stacks of sheets (6).

## Revendications

1. Procédé de fabrication d'un élément adhésif (1) à propriétés thermoplastiques, constitué d'un support de couche (3) résistant à la chaleur et muni d'une couche de colle fusible (3), caractérisé en ce qu'il consiste, pour fabriquer un élément adhésif apte à adhérer des deux côtés, à déposer, sur l'un des côtés du support de couche en un matériau perméable aux liquides, une colle fusible, à l'état liquide ou sous forme extrudée, qui convient pour le brochage sans couture d'une pile de feuillets (6) et dont la propriété à l'état pelliculaire est réglée de manière à ce qu'elle ne soit pas dure mais qu'elle ait une résistance à la flexion amoindrie, en effectuant le dépôt dans des conditions extérieures qui provoquent une solidification ou qui empêchent tout écoulement avant que la colle fusible puisse passer à travers le support de couche (2) jusqu'à l'autre côté de celui-ci.

2. Procédé suivant la revendication 2, caractérisé en ce qu'il consiste à déposer la colle fusible (2) sur un support de couche refroidi.

3. Procédé suivant la revendication 1 ou 2, caractérisé en ce qu'il consiste à faire passer le support de couche (2) avec une vitesse relativement grande le long du dispositif d'enduction.

4. Procédé suivant la revendication 1 ou l'une des suivantes, caractérisé en ce qu'il consiste à déposer la colle fusible en lui donnant une viscosité réglée d'une manière particulière.

5. Procédé suivant la revendication 1 ou l'une des suivantes, caractérisé en ce qu'il consiste à déposer la colle fusible en une épaisseur plus grande, par exemple comprise entre 200 microns et 500 microns qu'il ne serait nécessaire pour l'encollage d'un seul côté du support de couche (2).

6. Procédé de collage d'objets (16, 17) en utilisant un élément adhésif (1) préparé suivant les revendications 1 à 5, caractérisé en ce qu'il consiste d'abord à fixer de manière adhérente l'élément adhésif par son côté enduit (3) sur un objet (16) par application de chaleur modérée, puis à réunir les deux objets (16, 17) et à les presser l'un avec l'autre à la température élevée nécessaire pour le collage.

7. Procédé suivant la revendication 6, caractérisé en ce qu'il consiste à appliquer, de manière adhérente, l'élément adhésif (1) sur le dos d'une pile de feuillets (6) dont les feuillets ont été coupés de manière à être lisses et n'ont pas besoin d'être rendus rugueux, puis à amener une couverture (11) non revêtue sur le dos de la pile de feuillets (6) et à l'y appliquer avec action de la chaleur en faisant passer la pile de feuillets (6) avec la couverture (11) qui y est appliquée le long d'une zone de chauffage (13).

8. Installation pour la mise en oeuvre du procédé suivant la revendication 7, dans laquelle le long d'une voie de transport se trouvent des moyens de blocage (5) destinés à recevoir entre eux la pile de feuillets (6) et des dispositifs destinés à déposer une couche de colle fusible et à amener et à appliquer des couvertures (11) et analogues, caractérisée en ce qu'il est prévu successivement, un dispositif (10) de préchauffage et d'application d'un élément adhésif (1) muni de la colle fusible (3) sur le dos de la pile de feuillets (6), un dispositif chauffé (12) destiné à appliquer les couvertures (11) sur les dos de piles de feuillets (6) munies des éléments adhésifs (1) et une zone de chauffage (13) avec un dispositif (14) pressant les couvertures (11) sur la pile de feuillets (6).

FIG. 1

FIG. 2

FIG. 3

FIG. 4